# FASCICULE DE BREVET EUROPEEN

(11) **EP 3 601 767 B1**
(45) Date de publication et mention de la délivrance du brevet: **22.09.2021**
(21) Numéro de dépôt: 18712969.7
(22) Date de dépôt: 07.03.2018
(51) Int. Cl.: F02C 7/06

(54) **DEGAZEUR CENTRIFUGE DE TURBOMACHINE**
ZENTRIFUGALENTLÜFTER FÜR EINE STRÖMUNGSMASCHINE
CENTRIFUGAL DEAERATOR FOR A TURBOMACHINE

(30) Priorité: 21.03.2017 FR 1752306
(43) Date de publication de la demande: 05.02.2020
(73) Titulaire: Safran Helicopter Engines, 64510 Bordes (FR)
(72) Inventeur: FULLERINGER, Benjamin, 77550 Moissy-Cramayel (FR); PAJARD, Jean-Pierre, 77550 Moissy-Cramayel (FR); CAZAUX, Yannick, 77550 Moissy-Cramayel (FR)
(74) Mandataire: Gevers & Orès
(86) Numéro de dépôt international: PCT/FR2018/050526
(87) Numéro de publication internationale: WO 2018/172645

(56) Documents cités:
- FR-A1- 3 007 463
- US-A- 5 716 423

## Description

### 1. Domaine technique de l'invention

L'invention concerne un dégazeur centrifuge de turbomachine.

### 2. Arrière-plan technologique

Les turbomachines sont des systèmes complexes qui mettent en œuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisés aménagés au voisinage des ensembles tournants. Pour ce faire, un air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite accessoire, etc. Or, cet air ayant transité par différentes zones de la turbomachine, il est chargé en huile utilisé pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine.

Un tel dégazeur est en général agencé et entraîné par une prise de puissance mécanique au niveau de la boite accessoire ou du réducteur de la turbomachine.

De manière connue, un tel dégazeur centrifuge comprend une ou plusieurs enceinte(s) de séparation centrifuge du mélange air/huile agencée autour d'un arbre creux et délimitée par une paroi annulaire externe et une paroi annulaire interne. Le dégazeur comprend en outre une entrée axiale d'alimentation de l'enceinte avec le mélange air/huile, et une sortie d'huile périphérique ménagée dans la paroi externe. Ainsi, lors de la mise en rotation du dégazeur, obtenue en général par l'intermédiaire d'un pignon de la boite accessoire ou du réducteur, l'huile est naturellement entrainée par force centrifuge vers la sortie d'huile ménagée en périphérie du dégazeur. Une sortie d'air déshuilé est en outre ménagée dans la paroi interne et reliée à l'arbre creux, ce qui permet d'évacuer l'air vers l'extérieur.

Les inventeurs ont réalisé que dans les dégazeurs connus, une partie de l'huile extraite par la sortie périphérique du dégazeur est aspirée à nouveau par l'entrée axiale du dégazeur, ce qui limite les performances du dégazeur. Les inventeurs ont également réalisé que l'huile séparée de l'air par le dégazeur forme un film d'huile qui peut dans certains cas être évacué par l'entrée d'air axiale plutôt que par la sortie périphérique d'huile, ce qui contribue à enrichir davantage l'air à déshuiler, et limite donc également les performances du dégazeur.

Les inventeurs ont donc cherché à améliorer les performances des dégazeurs connus pour extraire davantage d'huile et limiter au maximum la quantité d'huile rejetée vers l'extérieur. En particulier, la réduction de la consommation en huile des turbomachines reste un accès de progrès majeur. Cela doit permettre d'optimiser la quantité d'huile embarquée et donc de réduire la masse de la turbomachine. Cela doit également permettre d'augmenter la durée des missions. Cela doit également réduire les opérations de maintenance sur les turbomoteurs. Enfin, cela doit permettre d'améliorer l'impact écologique des turbomoteurs.

L'art antérieur comprend également les documents FR-A1-3007463 et US-A-5716423.

### 3. Objectifs de l'invention

L'invention vise à fournir un dégazeur qui pallie au moins certains des inconvénients des dégazeurs connus.

L'invention vise en particulier à fournir, dans au moins un mode de réalisation, un dégazeur centrifuge de turbomachine qui présente des performances améliorées par rapport aux dégazeurs connus.

L'invention vise également à fournir, dans au moins un mode de réalisation, un dégazeur qui limite les risques de réintroduction dans le dégazeur de l'huile évacuée par ce dernier.

L'invention vise aussi à fournir, dans au moins un mode de réalisation, un dégazeur qui limite les risques d'évacuation d'un film d'huile par l'entrée d'air à déshuiler.

### 4. Exposé de l'invention

Pour ce faire, l'invention concerne un dégazeur centrifuge d'un mélange air/huile de turbomachine comprenant :
- une enceinte annulaire de séparation centrifuge dudit mélange agencée autour d'un arbre creux et délimitée par une paroi annulaire externe et une paroi annulaire interne,
- au moins une entrée axiale de mélange air/huile dans ladite enceinte,
- un pignon de mise en rotation de ladite enceinte comprenant un voile relié solidairement audit arbre creux et auxdites parois annulaires interne et externe de sorte qu'une rotation dudit pignon entraine ladite enceinte en rotation,
- au moins une sortie radiale d'huile ménagée dans ladite paroi externe et configurée pour pouvoir évacuer l'huile séparée dudit mélange vers l'extérieur du dégazeur,
- au moins une sortie d'air déshuilé ménagée dans ladite paroi interne et configurée pour pouvoir évacuer l'air déshuilé vers ledit arbre creux.

Un dégazeur centrifuge selon l'invention est caractérisé en ce que ladite (lesdites) entrée(s) axiale(s) de mélange et ladite (lesdites) sortie(s) radiale(s) d'huile sont agencées axialement de part et d'autre dudit voile dudit pignon de sorte à empêcher toute réintroduction d'huile évacuée par ladite (lesdites) sorties(s) radiale(s) d'huile dans l'enceinte par ladite (lesdites) entrée(s) axiale(s) de mélange.

Un dégazeur selon l'invention permet donc de ségréguer les flux d'entrée de mélange air/huile des flux d'évacuation d'huile en agençant astucieusement les entrées de mélange et les sorties d'huile par rapport au voile du pignon de mise en rotation du dégazeur. Cet agencement prévoit que les entrées de mélange et les sorties d'huile sont axialement agencées de part et d'autre du voile du pignon. Cela permet donc de limiter au maximum la réintroduction d'huile évacuée par les sorties radiales d'huile directement dans le mélange présent en entrée du dégazeur. En d'autres termes, le voile du pignon fait office de mur de séparation entre le mélange en entrée de dégazeur et l'huile évacuée par les sorties radiales d'huile. En outre, en fonctionnement, le pignon étant en rotation, les dents du pignon génèrent par brassage d'air, un mur d'air qui entoure le pignon et qui contribue donc également à limiter le passage de l'huile évacuée par les sorties radiales vers les entrées axiales de mélange agencées de l'autre côté du pignon. Le pignon peut être agencé axialement en tout point entre les entrées de mélange et les sorties d'huile. En particulier, il peut être agencé à proximité des entrées de mélange ou à proximité des sorties d'huile, de manière centrée ou non.

Cet agencement spécifique des entrées de mélange et des sorties d'huile permet de limiter le phénomène de réintroduction d'huile dans le mélange, ce qui améliore les performances de déshuilage du mélange air/huile. Cette amélioration des performances permet d'optimiser la quantité d'huile embarquée dans les turbomachines et donc de réduire la masse de la turbomachine. Cela permet par conséquent d'améliorer l'impact écologique d'un turbomoteur équipé d'un dégazeur selon l'invention.

Avantageusement, un dégazeur selon l'invention comprend au moins un disque anti-retour s'étendant perpendiculairement à la paroi externe et obstruant en partie ladite (lesdites) entrée(s) axiale(s) de mélange de manière à empêcher une sortie d'huile au voisinage de ladite paroi externe par ladite (lesdites) entrée(s) axiale(s) de mélange.

Selon cette variante, l'enceinte comprend un disque anti-retour qui fait office de mur empêchant la sortie d'huile par l'entrée du mélange. En particulier, en fonctionnement, l'enceinte est mise en rotation par l'intermédiaire du pignon. L'huile est alors entrainée par la force centrifuge vers la paroi externe de l'enceinte. Au voisinage de la paroi externe, avant l'évacuation de l'huile par les sorties radiales, l'huile forme un film d'huile qui s'étend sur l'intérieur de la paroi externe. Pour éviter que ce film ne glisse sur l'intérieur de la paroi externe et ne ressorte par les entrées axiales de mélange, l'invention selon cette variante prévoit un disque qui obstrue au niveau de la paroi externe le passage d'huile. Cela permet donc d'éviter que le mélange en entrée de l'enceinte ne soit enrichit par l'huile extraite du mélange en cours de traitement par le dégazeur.

Avantageusement et selon cette variante de l'invention, le disque anti-retour est formé par une portion du voile du pignon agencé en amont de ladite enceinte et entourant les entrées axiales de mélange.

Selon cette variante, le voile du pignon est agencé en amont de ladite enceinte. En outre, il est mis à contribution pour former le disque anti-retour.

Avantageusement et selon cette variante, ledit voile dudit pignon comprend des ouvertures d'accès à l'enceinte.

Le pignon étant agencé en amont de l'enceinte, le voile comprend avantageusement des ouvertures permettant au mélange d'accéder à l'enceinte.

Avantageusement et selon l'invention, ladite enceinte est formée d'une pluralité de compartiments agencés radialement autour de l'arbre creux, chaque compartiment étant alimenté en mélange par une entrée axiale de mélange et étant relié à une sortie radiale d'huile et à une sortie d'air déshuilé.

Selon cette variante, l'enceinte du dégazeur est divisée en une pluralité de compartiments, chaque compartiment étant relié à une entrée axiale du mélange pour pouvoir être alimenté en mélange, une sortie radiale d'huile pour pouvoir évacuer l'huile en dehors du dégazeur, et une sortie d'air déshuilé pour pouvoir évacuer l'air déshuilé vers l'arbre creux. Ces compartiments sont uniformément répartis autour de l'arbre creux. Cela permet d'améliorer le déshuilage du mélange en formant une pluralité de sous-enceinte centrifuge de séparation du mélange.

Avantageusement, dans un des modes de réalisation, un dégazeur selon l'invention pourra également comprendre une mousse métallique agencée dans ladite enceinte.

Un dégazeur équipé d'une mousse métallique, telle qu'une mousse commercialisée sous la dénomination Retimet®, permet de former une surface de contact potentiel importante avec le mélange air/huile ce qui permet d'améliorer la probabilité de capter une particule d'huile qui est ensuite centrifugée hors du dégazeur. Ces mousses font office de filtre. En outre, l'effet centrifuge permet d'éviter la saturation des filtres par l'évacuation continue des gouttes d'huiles accrochées aux filtres.

Avantageusement et selon l'invention, ladite mousse métallique s'étend axialement partiellement dans ladite enceinte de manière à délimiter un espace libre de mousse entre ladite entrée axiale de mélange et ladite mousse métallique, ledit espace libre favorisant l'aspiration du mélange à séparer et ladite mousse métallique favorisant le captage des particules d'huile à évacuer par l'enceinte centrifuge.

Selon cette variante avantageuse, la mousse métallique ne comble pas intégralement l'enceinte du dégazeur, mais uniquement une partie de l'enceinte. Une première partie au voisinage des entrées axiales de mélange est laissée libre de mousse et une deuxième partie au voisinage du fond de l'enceinte, c'est-à-dire agencée axialement à l'opposé des entrées, est remplie de mousse métallique.

Selon cette variante, le mélange air/huile entre dans le dégazeur par les entrées axiales et circule axialement dans cette première partie sans pertes de charge notable. Dans cette première partie, une première phase de déshuilage est effectuée par le déplacement des gouttes d'huile vers la périphérie de l'enceinte sous l'effet de la force centrifuge. La deuxième partie de l'enceinte est équipée de mousses métalliques qui sont attaquées axialement par les gouttes d'huile, limitant ainsi les pertes de charge. Les gouttes d'huile captées par les mousses sont ensuite centrifugées vers la périphérie de l'enceinte.

Avantageusement et selon cette variante, la mousse métallique présente une épaisseur variable entre la paroi interne et la paroi externe de l'enceinte de manière à uniformiser les pertes de charge entre les zones proches de la paroi interne peu soumises à la force centrifuge et les zones proches de la paroi externe fortement soumises à la force centrifuge.

Compte tenu de l'architecture d'un dégazeur selon l'invention, le chemin le plus court pour l'air entre l'entrée et la sortie d'air déshuilé est celui passant à la base des mousses, c'est-à-dire au voisinage de l'arbre creux. L'air a donc tendance à passer par cette partie basse, qui est en outre, moins soumise à la force centrifuge que les parties proches de la périphérie de l'enceinte. Pour limiter ce phénomène, cette variante prévoit une modification de la géométrie de la mousse entre la partie basse de la mousse (c'est-à-dire celle au voisinage de la paroi interne) et la partie haute de la mousse (c'est-à-dire celle au voisinage de la paroi externe), ce qui permet de mieux répartir le passage d'air et d'uniformiser les pertes de charges. Le flux est alors mieux réparti et les vitesses du mélange sont plus homogènes. L'huile qui remonte dans les mousses métalliques a donc tendance à former des gouttes de plus en plus grosses, ce qui augmente la concentration d'huile dans les mousses au voisinage de la périphérie de l'enceinte. La forme du filtre pourra également faciliter le drainage de l'huile contenu dans le filtre.

Selon une variante, les sorties d'air déshuilés sont exemptes de mousse métallique.

L'invention concerne également un turbomoteur comprenant un organe mécanique du type boite accessoires ou réducteur, caractérisé en ce qu'il comprend un dégazeur selon l'invention.

Un turbomoteur selon l'invention équipé d'un dégazeur selon l'invention consomme donc moins d'huile qu'un turbomoteur de l'art antérieur par une récupération d'huile améliorée. Un turbomoteur selon l'invention présente un poids plus léger qu'un turbomoteur de l'art antérieur. La durée d'une mission d'un hélicoptère équipé de turbomoteurs selon l'invention est donc plus longue. En outre, les opérations de maintenance sont moins fréquentes. Enfin, l'impact écologique d'un turbomoteur selon l'invention est meilleur que celui des turbomoteurs de l'art antérieur.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective et coupée selon un plan de symétrie d'un dégazeur de l'art antérieur mettant en évidence le principe général de fonctionnement du dégazeur,
- la figure 2 est une vue schématique en perspective et coupée selon un plan de symétrie d'un dégazeur de l'art antérieur mettant en évidence les problèmes rencontrés avec ce type de dégazeur,
- la figure 3 est une vue schématique partielle en perspective et coupée selon un plan de symétrie d'un dégazeur selon un mode de réalisation de l'invention mettant en évidence un premier avantage apporté par ce dégazeur,
- la figure 4 est une vue schématique partielle en perspective et coupée selon un plan de symétrie du dégazeur de la figure 3 mettant en évidence un deuxième avantage apporté par ce dégazeur,
- la figure 5 est une vue schématique en perspective et coupée selon un plan de symétrie d'un dégazeur selon un autre mode de réalisation de l'invention,
- la figure 6 est une vue schématique en perspective et coupée selon un plan de symétrie d'un dégazeur selon un autre mode de réalisation de l'invention,
- la figure 7 est une vue schématique partielle en perspective et coupée selon un plan de symétrie d'un dégazeur selon un autre mode de réalisation et mettant en évidence le déplacement de gouttes d'huile dans une mousse métallique.

### 6. Description détaillée d'un mode de réalisation de l'invention

Sur la figure, les échelles et les proportions ne sont pas strictement respectées et ce, à des fins d'illustration et de clarté.

Sur toutes les figures et d'un mode de réalisation à un autre, les mêmes références numériques sont utilisées pour des éléments identiques ou de même nature.

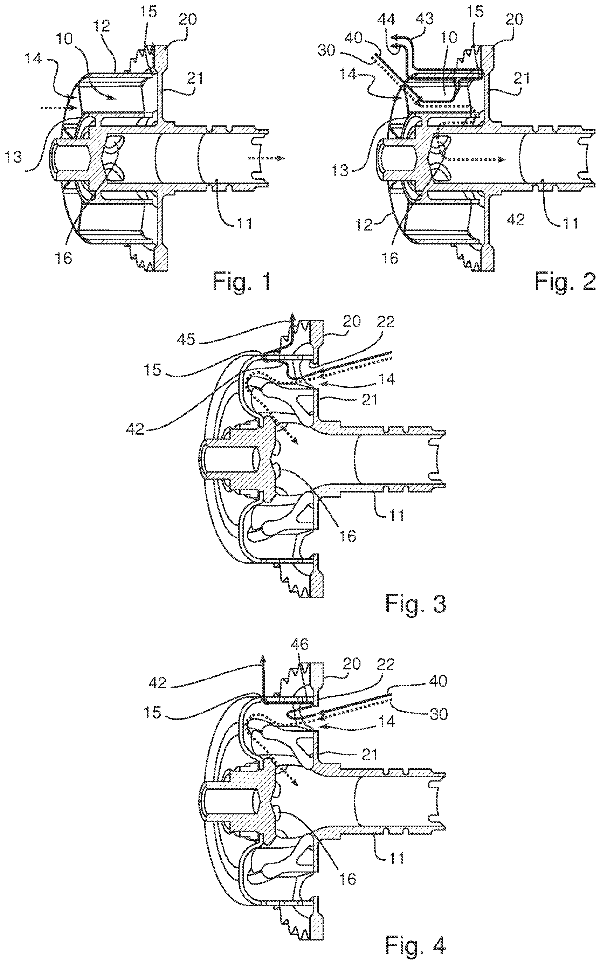

La figure 1 illustre l'architecture d'un dégazeur connu. Un tel dégazeur comprend de manière classique une enceinte 10 annulaire de séparation centrifuge d'un mélange air/huile agencée autour d'un arbre 11 creux. Cette enceinte 10 annulaire est délimitée par une paroi annulaire externe 12 et une paroi annulaire interne 13. Cette enceinte 10 comprend une pluralité de compartiments de dégazage répartis autour de l'arbre 11 creux.

Le dégazeur comprend en outre une pluralité d'entrées axiales 14 permettant au mélange air/huile de pénétrer dans l'enceinte 10. En général et tel que représenté sur les figures, chaque compartiment de l'enceinte 10 est relié à une entrée axiale 14 de telle sorte que chaque compartiment puisse recevoir un mélange à séparer par une entrée dédiée.

Le dégazeur comprend en outre une pluralité de sorties radiales 15 d'huile ménagée dans la paroi externe 12 et configurée pour pouvoir évacuer l'huile séparée du mélange par l'effet de la force centrifuge du dégazeur. En général, et tel que représenté sur les figures, chaque compartiment de l'enceinte 10 est relié à une ou plusieurs sortie(s) radiale(s) 15 d'huile.

Le dégazeur comprend en outre une pluralité de sorties d'air 16 déshuilé ménagée dans la paroi interne 13 et configurée pour pouvoir évacuer l'air déshuilé vers l'arbre 11 creux. En général et tel que représenté sur les figures, chaque compartiment de l'enceinte 10 est relié à une sortie d'air 16 déshuilé.

Enfin, le dégazeur comprend un pignon 20 de mise en rotation de l'enceinte 10 comprenant un voile 21 relié solidairement à l'arbre 11 creux et aux parois annulaires interne 13 et externe 12,

La figure 2 illustre deux problèmes techniques rencontrés avec un dégazeur de l'art antérieur tel qu'illustré par la figure 1. Sur toutes les figures, les flèches continues représentent la circulation de l'huile et les flèches en pointillés représentent la circulation de l'air. En entrée de dégazeur, un mélange d'air et d'huile pénètre dans l'enceinte 10 du dégazeur. L'air du mélange est représenté par la flèche 30 en pointillé et l'huile du mélange est représenté par la flèche 40 en continue. Sous l'effet de la force centrifuge, l'huile est évacuée par les sorties 15 d'huile périphériques. Cette évacuation est représentée par la flèche 42 en continue. Un premier problème technique d'un dégazeur connu réside dans le fait qu'une partie de l'huile évacuée par les sorties 15 d'huile périphériques est réintroduite vers l'entrée du dégazeur. Ce phénomène est représenté par la flèche 43 en continue. Un deuxième problème technique d'un dégazeur connu réside dans le fait qu'une partie de l'huile introduite dans l'enceinte 10 est refoulée directement vers l'entrée avant même d'être évacuée par les sorties d'huile. Ce phénomène est représenté par la flèche 44 en continue. L'air déshuilé est lui évacué vers l'arbre creux. Cette évacuation est représentée par la flèche 31 en pointillé.

Ainsi, une partie de l'huile du mélange air/huile à séparer est réintroduite dans le mélange avec les dégazeurs de l'art antérieur, soit directement avant même l'évacuation de l'huile par les sorties d'huile périphériques, soit après évacuation de l'huile, par réintroduction de l'huile dans le mélange.

Les figures 3 et 4 illustrent un dégazeur selon un mode de réalisation de l'invention. Ce dégazeur permet de résoudre les problèmes rencontrés avec les dégazeurs de l'art antérieur.

Les mêmes références sont utilisées pour les éléments communs au dégazeur selon ce mode de réalisation de l'invention et au dégazeur de l'art antérieur tel que décrit en lien avec les figures 1 et 2.

Un dégazeur selon l'invention comprend tel que représenté sur les figures 3 et 4 des entrées axiales 14 de mélange et des sorties radiales 16 d'huile agencées axialement de part et d'autre du voile 21 du pignon 20.

Cet agencement particulier des entrées 14 et des sorties 16 par rapport au voile 21 du pignon 20 permet d'empêcher toute réintroduction dans l'enceinte d'huile évacuée par les sorties radiales. En particulier, et tel que représenté par les flèches en continue 45, l'huile évacuée par les sorties 15, formées par des orifices dans la paroi 12 externe, ne peut pas se diriger vers les entrées 14 parce que le pignon 20 fait office de mur de séparation. En outre, la rotation du pignon génère un mur d'air qui empêche la circulation d'huile vers les entrées 14. En effet, les dents du pignon 20 brassent l'air au cours de la rotation du pignon, ce qui a pour effet de former un mur d'air qui empêche le passage d'huile vers les entrées axiales 14.

En outre, selon un mode de réalisation avantageux, le dégazeur comprend un disque 22 anti-retour qui s'étend perpendiculairement à la paroi 12 externe et qui obstrue en partie les entrées axiales 14 de manière à empêcher une sortie d'huile au voisinage de la paroi externe 12 par les entrées axiales 15.

En particulier et tel que représenté par les flèches 46 en continue, l'huile au voisinage de la paroi externe ne peut ressortir de l'enceinte par les entrées 14 parce qu'elle est bloquée par le disque 22 qui s'étend au voisinage de la paroi externe.

Ce disque est réalisé par une excroissance du voile 21 du pignon 22 au niveau des entrées 14.

Un dégazeur selon l'invention pallie donc les problèmes techniques rencontrés avec un dégazeur de l'art antérieur.

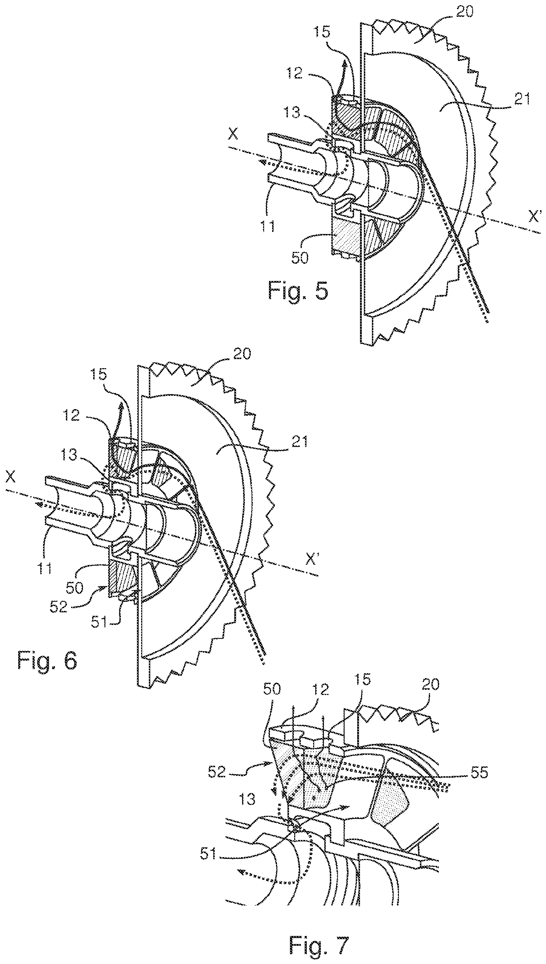

Selon un mode de réalisation avantageux et tel que représenté sur la figure 5, le dégazeur comprend en outre des mousses 50 métalliques agencées dans chaque compartiment de l'enceinte 10. Selon le mode de réalisation de la figure 5, les mousses occupent l'intégralité du compartiment. Ces mousses sont par exemple des mousses commercialisées sous la marque Retimet®. Elles permettent d'améliorer l'efficacité du dégazeur en augmentant la probabilité de capter des particules d'huile.

Selon un mode de réalisation avantageux et tel que représenté sur les figures 6 et 7, les mousses 50 métalliques ne s'étendent pas intégralement dans les compartiments, mais s'étendent uniquement sur une portion axiale de chaque compartiment de manière à former deux espaces distincts successifs dans le compartiment : un espace libre 51 de mousse et un espace garni 52 de mousse. L'espace libre 51 de mousse est alimenté en mélange par les entrées 14 axiales et il débouche dans l'espace garni 52 de mousse. L'espace garni 52 de mousse débouche dans les sorties d'huile périphériques. L'espace libre 51 de mousse présente ainsi une fonction centrifuge simple du dégazeur permettant au mélange huile/air de pénétrer dans l'enceinte 10 du dégazeur, puis de se déplacer axialement dans un repère tournant. Au cours de ce déplacement, une première phase de déshuilage est réalisée. L'espace garni 52 de mousse présente une fonction de captage des gouttes d'huile non extraites au cours de la première phase. Cette deuxième phase de déshuilage est en outre réalisée dans l'espace garni 52 de mousse sans pertes de charges notables du fait de l'attaque axiale des gouttes d'huile. De plus, la séparation de l'enceinte entre un espace libre de mousse et un espace garni de mousse permet d'éviter la saturation des mousses métalliques de l'espace garni de mousse par une première phase de déshuilage dans l'espace libre de mousse. Les inventeurs ont réalisé que cette architecture permet de fournir des résultats qui allient les faibles pertes de charge des dégazeurs totalement libres de mousse et la bonne séparation des dégazeurs totalement garni de mousse. En d'autres termes, les deux espaces coopèrent pour fournir un résultat qui va au-delà de la somme des résultats de chacun des deux espaces pris individuellement.

Selon un mode de réalisation avantageux et tel que représenté schématiquement sur la figure 7, les mousses métalliques présentent dans chaque compartiment une épaisseur variable entre la paroi interne 13 et la paroi externe 12, ce qui permet d'uniformiser les pertes de charge entre les zones proches de la paroi interne 13 peu soumises à la force centrifuge et les zones proches de la paroi externe 12 fortement soumises à la force centrifuge.

La figure 7 illustre en outre de manière schématique le déplacement de gouttes d'huile 55 dans une mousse métallique. Les gouttes d'huile 55 sont captées par la mousse 50 et se déplacent vers la périphérie du dégazeur du fait de la force centrifuge résultant de la mise en rotation de l'enceinte par l'intermédiaire du pignon 20. En revanche, l'air déshuilé est naturellement évacué vers l'arbre creux 11 du dégazeur. Le déplacement de l'air est représenté schématiquement par les flèches en pointillées.

L'invention ne se limite pas aux seuls modes de réalisation décrits en lien avec les figures. Par exemple, la répartition des sorties radiales d'huile sur la périphérie du dégazeur peut être réalisée de manière différente sans remettre en cause le principe de l'invention qui est d'agencer les entrées axiales de mélange et les sorties radiales d'huile, axialement de part et d'autre du pignon d'entraînement en rotation du dégazeur. En outre, selon d'autres modes de réalisation non représentés, les mousses métalliques peuvent présenter d'autres géométries à l'intérieur des compartiments de l'enceinte.

## Revendications

1. Dégazeur centrifuge d'un mélange air/huile de turbomachine comprenant :
- une enceinte (10) annulaire de séparation centrifuge dudit mélange agencée autour d'un arbre (11) creux et délimitée par une paroi annulaire externe (12) et une paroi annulaire interne (13),
- au moins une entrée axiale (14) dudit mélange air/huile dans ladite enceinte (10),
- un pignon (20) de mise en rotation de ladite enceinte (10) comprenant un voile (21) relié solidairement audit arbre (11) creux et auxdites parois annulaires interne (13) et externe (12) de sorte qu'une rotation dudit pignon (20) entraine ladite enceinte (10) en rotation,
- au moins une sortie radiale (15) d'huile ménagée dans ladite paroi externe (12) et configurée pour pouvoir évacuer l'huile séparée dudit mélange vers l'extérieur du dégazeur,
- au moins une sortie d'air déshuilé (16) ménagée dans ladite paroi interne (13) et configurée pour pouvoir évacuer l'air déshuilé vers ledit arbre (11) creux,
**caractérisé en ce que** ladite(lesdites) entrée(s) axiale(s) (14) de mélange et ladite (lesdites) sortie(s) radiale(s) (15) d'huile sont agencées axialement de part et d'autre dudit voile (21) dudit pignon (20) de sorte à empêcher toute réintroduction d'huile évacuée par ladite (lesdites) sortie(s) radiale(s) (15) d'huile dans l'enceinte (10) par ladite (lesdites) entrée(s) axiale(s) (14) de mélange.

2. Dégazeur selon la revendication 1, **caractérisé en ce qu'**il comprend au moins un disque (22) anti-retour s'étendant perpendiculairement à la paroi externe (12) et obstruant en partie ladite (lesdites) entrée(s) axiale(s) (14) de mélange dans l'enceinte (10) de manière à empêcher une sortie d'huile au voisinage de ladite paroi externe (12) par ladite (lesdites) entrée(s) axiale(s) (14) de mélange.

3. Dégazeur selon la revendication 2, **caractérisé en ce que** le disque (22) anti-retour est formé par une portion du voile (21) du pignon (22) agencée en amont de ladite enceinte (10) et entourant les entrées axiales (14) de mélange.

4. Dégazeur selon la revendication 3, **caractérisé en ce que** ledit voile (21) dudit pignon (20) comprend des ouvertures d'accès à l'enceinte (10).

5. Dégazeur selon l'une des revendications 1 à 4, **caractérisé en ce que** ladite enceinte (10) est formée d'une pluralité de compartiments agencés radialement autour de l'arbre (11) creux, chaque compartiment étant alimenté en mélange par une entrée axiale (14) de mélange et étant relié à une sortie radiale (15) d'huile et à une sortie d'air déshuilé (16).

6. Dégazeur selon l'une des revendications 1 à 5, **caractérisé en ce qu'**il comprend une mousse (50) métallique agencée dans ladite enceinte (10).

7. Turbomoteur comprenant un organe mécanique du type boite accessoires ou réducteur, **caractérisé en ce qu'**il comprend un dégazeur selon l'une des revendications 1 à 6 adapté pour être entrainé en rotation par ledit organe mécanique.

## Patentansprüche

1. Zentrifugalentgaser für ein Luft/Öl-Gemisch einer Turbomaschine, umfassend:
- ein ringförmiges Gehäuse (10) zur Zentrifugaltrennung des Gemisches, das um eine Hohlwelle (11) herum angeordnet und durch eine ringförmige äußere Wand (12) und eine ringförmige innere Wand (13) begrenzt ist,
- mindestens einen axialen Einlass (14) für das Luft/Öl-Gemisch in das Gehäuse (10),
- ein Ritzel (20) zum In-Drehung-Versetzen des Gehäuses (10), umfassend eine Schale (21), die einstückig mit der Hohlwelle (11) und den inneren (13) und äußeren (12) ringförmigen Wänden verbunden ist, so dass eine Drehung des Ritzels (20) das Gehäuse (10) in Drehung versetzt,
- mindestens einen radialen Auslass (15) für Öl, der in der Außenwand (12) ausgebildet ist und so konfiguriert ist, dass er das aus dem Gemisch abgeschiedene Öl nach außerhalb des Entgasers abführen kann,
- mindestens einen Auslass (16) für entölte Luft, der in der Innenwand (13) ausgebildet ist und so konfiguriert ist, dass er die entölte Luft an die Hohlwelle (11) abführen kann,
**dadurch gekennzeichnet, dass** der (die) axiale(n) Einlass (Einlässe) (14) für Gemisch und der (die) radiale(n) Auslass (Auslässe) (15) für Öl axial auf beiden Seiten der Schale (21) des Ritzels (20) angeordnet sind, um jede Wiedereinführung von Öl, das durch den (die) radialen Auslass (Auslässe) (15) für Öl in das Gehäuse (10) über den (die) axialen Einlass (Einlässe) (14) für Gemisch abgeführt wird, zu verhindern.

2. Entgaser nach Anspruch 1, **dadurch gekennzeichnet, dass** er mindestens eine Rückschlagscheibe (22) umfasst, die sich senkrecht zur Außenwand (12) erstreckt und den (die) axialen Einlass (Einlässe) (14) für Gemisch im Gehäuse (10) teilweise versperrt, um ein Austreten von Öl in der Nähe der Außenwand (12) über dem (den) Einlass (Einlässen) (14) für Gemisch zu verhindern..

3. Entgaser nach Anspruch 2, **dadurch gekennzeichnet, dass** die Rückschlagscheibe (22) durch einen Abschnitt der Schale (21) des Ritzels (22) gebildet wird, der stromaufwärts des Gehäuses (10) angeordnet ist und die axialen Einlässe (14) für Gemisch umgibt.

4. Entgaser nach Anspruch 3, **dadurch gekennzeichnet, dass** die Schale (21) des Ritzels (20) Öffnungen für den Zugang zum Gehäuse (10) umfasst.

5. Entgaser nach einem der Ansprüche 1 bis 4, **dadurch gekennzeichnet, dass** das Gehäuse (10) aus einer Vielzahl von radial um die Hohlwelle (11) angeordneten Kammern gebildet ist, wobei jede Kammer durch einen axialen Einlass (14) für Gemisch mit Gemisch versorgt wird und mit einem radialen Auslass (15) für Öl und mit einem Auslass (16) für entölte Luft verbunden ist.

6. Entgaser nach einem der Ansprüche 1 bis 5, **dadurch gekennzeichnet, dass** er einen Metallschaum (50) umfasst, der in dem Gehäuse (10) angeordnet ist.

7. Turbomotor, der ein mechanisches Organ vom Typ eines Hilfsgetriebes oder eines Untersetzungsgetriebes umfasst, **dadurch gekennzeichnet, dass** er einen Entgaser nach einem der Ansprüche 1 bis 6 umfasst, der so angepasst ist, dass er von dem mechanischen Organ in Drehung versetzt wird.

## Claims

1. Centrifugal deaerator for an air/oil mixture of a turbine engine comprising:
- an annular enclosure (10) for the centrifugal separation of said mixture arranged around a hollow shaft (11) and delimited by an outer annular wall (12) and an inner annular wall (13),
- at least one axial inlet (14) for said air/oil mixture in said enclosure (10),
- a pinion (20) for rotating said enclosure (10) comprising a sail (21) securely connected to said hollow shaft (11) and to said inner (13) and outer (12) annular walls such that rotation of said pinion (20) drives said enclosure (10) in rotation,
- at least one radial oil outlet (15) arranged in said outer wall (12) and configured to be able to evacuate the oil separated from said mixture towards the outside of the deaerator,
- at least one oil-free air outlet (16) arranged in said inner wall (13) and configured to be able to evacuate the oil-free air towards said hollow shaft (11),
**characterised in that** said axial mixture inlet(s) (14) and said radial oil outlet(s) (15) are axially arranged on either side of said sail (21) of said pinion (20) so as to prevent any reintroduction of oil evacuated by said radial oil outlet(s) (15) in the enclosure (10) by said axial mixture inlet(s) (14).

2. Deaerator according to claim 1, **characterised in that** it comprises at least one anti-return disc (22) extending perpendicularly to the outer wall (12) and partially blocking said axial mixture inlet(s) (14) in the enclosure (10) so as to prevent an oil outlet in the vicinity of said outer wall (12) by said axial mixture inlet(s) (14).

3. Deaerator according to claim 2, **characterised in that** the anti-return disc (22) is formed by a portion of the sail (21) of the pinion (22) arranged upstream of said enclosure (10) and surrounding the axial mixture inlets (14).

4. Deaerator according to claim 3, **characterised in that** said sail (21) of said pinion (20) comprises access openings to the enclosure (10).

5. Deaerator according to one of claims 1 to 4, **characterised in that** said enclosure (10) is formed of a plurality of compartments arranged radially around the hollow shaft (11), each compartment being provided with mixture through an axial mixture inlet (14) and being connected to a radial oil outlet (15) and to an oil-free air outlet (16).

6. Deaerator according to one of claims 1 to 5, **characterised in that** it comprises a metal foam (50) arranged in said enclosure (10).

7. Turboshaft engine comprising a mechanical member of the accessory box or reduction gear type, **characterised in that** it comprises a deaerator according to one of claims 1 to 6, adapted to be driven in rotation by said mechanical member.
